# EUROPÄISCHE PATENTSCHRIFT

(11) **EP 3 299 216 B1**
(45) Veröffentlichungstag und Bekanntmachung des Hinweises auf die Patenterteilung: **19.02.2020**
(21) Anmeldenummer: 17001570.5
(22) Anmeldetag: 21.09.2017
(51) Int. Cl.: B60N 2/75, B60N 2/42, B60N 2/427, B63B 29/00

(54) **ARMLEHNE**
ARMREST
ACCOUDOIR

(30) Priorität: 21.09.2016 DE 102016011331
(43) Veröffentlichungstag der Anmeldung: 28.03.2018
(73) Patentinhaber: GRAMMER AG, 92224 Amberg (DE)
(72) Erfinder: Deeken, Georg, 92245 Kümmersbruck (DE); Bergk, Ronny, 92284 Poppenricht (DE)
(74) Vertreter: Roche, von Westernhagen & Ehresmann

(56) Entgegenhaltungen:
- DE-A1-102009 023 712
- DE-A1-102014 206 031
- DE-T5-112005 003 213
- US-A- 5 658 043

## Beschreibung

Die Erfindung betrifft eine Ausstattungsvorrichtung eines Fahrzeugs.

Eine solche Ausstattungsvorrichtung ist aus der DE 10 2006 014 822 A1 bekannt. Die Ausstattungsvorrichtung umfasst ein Ausstattungsteil, wie z.B. eine schwenkbare Armauflage. Der Armauflage ist eine Sicherungsvorrichtung zugeordnet, die bei Überschreiten einer bestimmten Fahrzeugneigung oder einer bestimmten Fahrzeugbeschleunigung mittels einer Auslösevorrichtung betätigt wird. Die Sicherungsvorrichtung weist Blockiermittel auf, welche zwischen einer Neutralstellung und einer wenigstens einer Sperrstellung bewegbar sind, wobei die Blockiermittel in der wenigstens einen Sperrstellung eine Bewegung des Ausstattungsteils verhindern.

In DE 10 2014 206 031 A1 ist eine schwenkbare Armlehne offenbart, die ein Pendelelement 18 umfasst, welches um eine feste Schwenkachse schwenkbar ist.

DE 11 2005 003 213 T5 betrifft einen Sitzlehnenabstützmechanismus. Der Mechanismus umfasst Mittel zum Absorbieren kinetischer Energie. Das allmähliche Verlangsamen der Bewegung der Sitzlehne kann verhindern, dass ein Insasse des Sitzes infolge des schnellen Anhaltens der Sitzlehne verletzt wird (siehe Abs. 98). In den Absätzen 124 bis 130 ist beschrieben, dass kinetische Energie durch die Bewegung eines Zapfens in einem bezüglich des Durchmessers des Zapfens verengten Langloch erreicht wird.

US 5,658,043 betrifft eine Armlehne mit einem um eine feste Schwenkachse 28 bewegbaren Pendel, mit welchem die Bewegung der Armlehne verhindert werden kann.

DE 10 2009 023 712 A1 betrifft eine Armlehne mit Fliehkraftpendel. Die Armlehne ist zwischen einer Ruheposition und einer Stützposition schwenkbar an einer Unterkonstruktion gelagert. Eine Sperreinrichtung umfasst einen um eine feste Drehachse drehbargelagertes Pendel, welches bei Überschreitung eines bestimmten Verzögerungswertes durch die dabei auftretende Fliehkraft mittels eines Fangelements formschlüssig mit einem funktionskomplementär angeordneten Haltelement in Eingriff kommt und die Armlehne dadurch fixiert.

Es war Aufgabe der Erfindung eine Ausstattungsvorrichtung mit einer Verriegelungsvorrichtung zu schaffen, wobei das Ausstattungsteil bei einer Fahrzeugverzögerung sicher verriegelt ist, so dass eine Bewegung des Ausstattungsteils ausgeschlossen ist.

Die Aufgabe wurde gelöst durch eine Ausstattungsvorrichtung mit den Merkmalen des Anspruchs 1.

Die Ausstattungsvorrichtung ist in einem Fahrzeug angeordnet. Ein "Fahrzeug" ist im Sinne der Erfindung ein Land-, Luft- oder Wasserfahrzeug. Die Ausstattungsvorrichtung umfasst ein zwischen einer ersten Position und einer zweiten Position bewegbares Ausstattungsteil, welches an einem fahrzeugfesten Basisteil translatorisch und / oder rotatorisch bewegbar gelagert ist. Die Ausstattungsvorrichtung umfasst ferner eine Verriegelungsvorrichtung mit einem Riegel, welcher mittels eines Schwenkgelenks um eine Schwenkachse derart schwenkbar gelagert ist, dass er im Falle einer Fahrzeugverzögerung aus einer Löseposition in eine erste Riegelposition schwenkt. In der Löseposition ist das Ausstattungsteil frei bewegbar und in der Riegelposition ist das Bewegen des Ausstattungsteil durch den Kontakt zwischen wenigstens einem Anschlag und dem Riegel in wenigstens eine Richtung verhindert. Der Riegel ist z.B. an dem Basisteil und der Anschlag an dem Ausstattungsteil gelagert. Gemäß einer Alternative kann auch der Riegel an dem Ausstattungsteil und der Anschlag an dem Basisteil gelagert.

Das Schwenkgelenk ist erfindungsgemäß von einer in einem Langloch gelagerten Lagerachse gebildet. Die Lagerachse kann sich zur Verhinderung einer Rückbewegung des Riegels in die Löseposition relativ zu dem Langloch von der ersten Riegelposition, in welcher die Lagerachse in einem ersten Bereich des Langlochs angeordnet ist, in eine zweite Riegelposition bewegen, in welcher die Lagerachse in einem zweiten Bereich des Langlochs angeordnet ist. Wenn die Lagerachse in dem zweiten Bereich des Langlochs angeordnet ist, kann sich der Riegel nicht in die Löseposition zurückbewegen.

Eine Ausgestaltung der Erfindung ist dadurch gekennzeichnet, dass das Ausstattungsteil mittels eines Schwenkgelenks um eine Schwenkachse zwischen einer ersten Position und einer zweiten Position schwenkbar an dem Basisteil gelagert ist. Das Basisteil kann z.B. U-förmig ausgebildet sein und zwei seitliche Flankenbereiche aufweisen, zwischen denen ein Bereich des Ausstattungsteils, insbesondere der Endbereich einer Armlehne, angeordnet ist. Das Schwenkgelenk kann derart gebildet sein, dass seitlich von dem Ausstattungsteil vorragende Vorsprünge in Bohrungen greifen, die in den Flankenbereichen des Basisteils ausgebildet sind.

Eine Ausführungsform ist dadurch gekennzeichnet, dass das Langloch dem Riegel und die Lagerachse dem Basisteil zugeordnet ist oder dass die Lagerachse dem Riegel und das Langloch dem Basisteil zugeordnet ist. Gemäß einer ersten Alternative ist z.B. in dem Riegel ein Langloch ausgebildet, in welches eine Lagerachse eingreift oder dieses durchgreift. Die Lagerachse kann z.B. an dem Basisteil befestigt sein oder von einem Niet gebildet sein, der das Langloch und eine Bohrung in dem Basisteil durchgreift. In diesem Fall ist die Lagerachse relativ zu dem Basisteil unbeweglich angeordnet.

Gemäß einer Alternative könnte das Langloch auch in dem Basisteil ausgebildet sein und die Lagerachse ist dem Riegel zugeordnet. In diesem Fall ist die Lagerachse relativ zu dem Riegel unbeweglich angeordnet. Die Lagerachse kann z.B. an dem Riegel befestigt sein oder als Niet ausgebildet sein, welcher eine Bohrung in dem Riegel und das Langloch in dem Basisteil durchgreift.

Eine weitere Ausgestaltung der Erfindung ist dadurch gekennzeichnet, dass der Riegel von einer Feder in die Löseposition belastet ist. Mit der Auslegung der Feder, die den Riegel in die Löseposition belastet, kann der Grenzwert der Beschleunigung definiert werden, der notwendig ist, um den Riegel von der Löseposition in die Riegelposition zu bewegen. Mit anderen Worten, der Grenzwert ist mit Hilfe der Wahl der Federdaten einstellbar.

Der Riegel steht gemäß einer Ausführungsform in der Löseposition und / oder in wenigstens einer Riegelposition in Kontakt mit wenigstens einem Widerlager. Das Widerlager bildet Anschläge aus, so dass die Endpositionen der Bewegung des Riegels definiert sind.

Der Riegel führt gemäß einer weiteren Ausführungsform bei der Bewegung zwischen der ersten Riegelposition und der zweiten Riegelposition eine Bewegung in radiale Richtung durch. Wird z.B. der Riegel von dem Ausstattungsteil in die zweite Riegelposition bewegt, übt dieses eine Kraft in radiale Richtung auf den Riegel aus. Mit Hilfe dieser Ausführungsform kann das Langloch relativ zu der Lagerachse von einem ersten Bereich in einen zweiten Bereich bewegt werden.

Eine Ausführungsform der Erfindung ist dadurch gekennzeichnet, dass die Verriegelungsvorrichtung derart ausgebildet ist, dass bei einer Bewegung des Ausstattungsteils der Riegel von dem Ausstattungsteils von der ersten Riegelposition in die zweite Riegelposition bewegt wird. Wenn sich der Riegel in der ersten Riegelposition befindet, kann z.B. das Ausstattungsteil den Riegel durch eine bei der Fahrzeugverzögerung hervorgerufene Bewegung des Ausstattungsteils in die zweite Riegelposition bewegen. Das hat den Vorteil, dass der Riegel nicht in die zweite Riegelposition bewegt wird, wenn sich das Ausstattungsteil nicht bewegt. In diesem Fall wird der Riegel z.B. von einer Feder wieder in die Löseposition bewegt.

Ist z.B. das Ausstattungsteil eine schwenkbar gelagerte Armauflage einer Armlehne, kann die erste Position einer etwa vertikalen Nichtgebrauchsposition und die zweite Position einer etwa horizontalen Gebrauchsposition der Armauflage entsprechen. Bei der Bewegung aus der ersten Position in Richtung der zweiten Position kann die Armauflage den Riegel in die zweite Riegelposition bewegen. Diese Bewegung des Riegels kann durch eine sehr geringe Bewegung des Ausstattungsteils erfolgen, so dass diese geringe Bewegung des Ausstattungsteils für den Fahrzeuginsassen keine Gefahr darstellt. Wenn die Armauflage den Riegel auf diese Weise in die zweite Riegelposition bewegt, wird eine Bewegung des Riegels in die zweite Riegelposition vermieden, wenn die Armauflage in ihrer Position verbleibt.

Ausstattungsvorrichtung dadurch gekennzeichnet, dass die Lagerachse in dem ersten Bereich mit einer Spielpassung und in dem zweiten Bereich mit einer Presspassung aufgenommen ist. Wenn die Lagerachse relativ zu dem Riegel bei der Bewegung in die zweite Riegelposition in den zweiten Bereich verlagert wird, verhindert die Presspassung zwischen der Lagerachse und dem Riegel die weitere Bewegung des Riegels, zumindest die Relativbewegung der Lagerachse aus dem zweiten Bereich in den ersten Bereich. Durch die Presspassung ist der Riegel kraftschlüssig in der Riegelposition gehalten.

Eine Ausführungsform der Erfindung ist dadurch gekennzeichnet, dass der Riegel ein erstes Formschlusselement und das Basisteil ein zweites Formschlusselement aufweist und dass in der Löseposition und der ersten Riegelposition das erste Formschlusselement und das zweite Formschlusselement außer Eingriff sind und in der zweiten Riegelposition in Eingriff sind. Bei der Bewegung des Riegels von der ersten Riegelposition in die zweite Riegelposition bewegen sich z.B. das erste Formschlusselement und das zweite Formschlusselement in Eingriff.

Eine Ausgestaltung der Erfindung ist dadurch gekennzeichnet, dass die Ausstattungsvorrichtung von einer Armlehne und das schwenkbare Ausstattungsteil von einer Armauflage der Armlehne gebildet ist. Die Armlehne kann entsprechend der oben erwähnten Ausgestaltungen der Erfindung ausgebildet sein.

Weitere Vorteile ergeben sich anhand eines in den Fig. dargestellten Ausführungsbeispiels. Die schematischen Fig. zeigen:
Fig. 1 eine perspektivische Darstellung einer Ausstattungsvorrichtung in Form einer Armelehnenvorrichtung eines Fahrzeugs.
Fig. 2 eine Seitenansicht der Ausstattungsvorrichtung in einer Gebrauchsposition,
Fig. 3 eine Seitenansicht der Ausstattungsvorrichtung in einer Nichtgebrauchsposition,
Fig. 4 eine Seitenansicht der Ausstattungsvorrichtung in einer Zwischenposition, die eine zweite Riegelposition im Sinne der Erfindung darstellt, in welcher eine Bewegung des Ausstattungsteils in Richtung der Gebrauchsposition verriegelt ist.

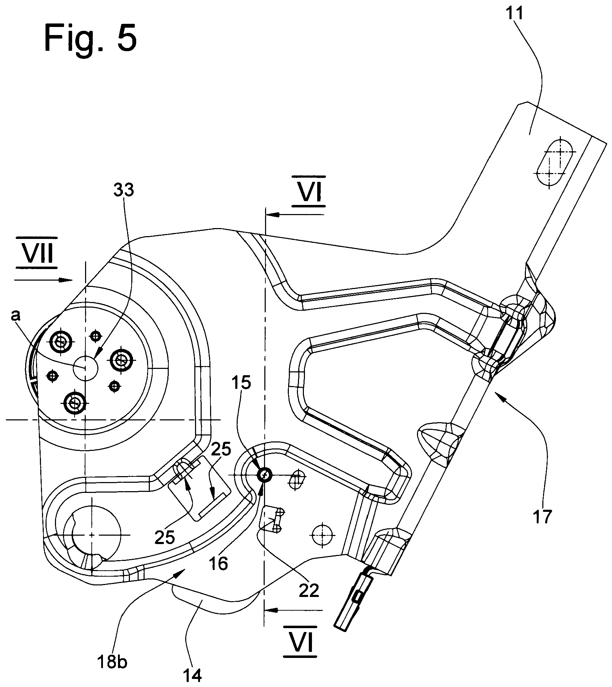

Fig. 5 eine vergrößerte Seitenansicht des Basisteils der Ausstattungsvorrichtu ng,
Fig. 6 eine Schnittdarstellung gemäß Schnittlinie VI - VI in Fig. 5,
Fig. 7 eine Frontansicht des Basisteils gemäß Ansichtspfeil VII in Fig. 5,
Fig. 8 eine Schnittdarstellung gemäß Schnittlinie VIII - VIII in Fig. 7, wobei sich der Riegel in einer Löseposition befindet,
Fig. 9 in Anlehnung an Fig. 8, die Schnittdarstellung, wobei sich der Riegel in einer ersten Riegelposition befindet,
Fig. 10 in Anlehnung an Fig. 9, die Schnittdarstellung, wobei sich der Riegel in einer zweiten Riegelposition befindet,
Fig. 11 eine Explosionsdarstellung des Riegels sowie der Lagerachse,
Fig. 12 eine Seitenansicht des Riegels als Einzelteil.

Eine Ausstattungsvorrichtung insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben hinzugefügt oder weggelassen sind.

Die Ausstattungsvorrichtung 10 ist im vorliegenden Ausführungsbeispiel als Armlehne ausgebildet. Die Ausstattungsvorrichtung 10 umfasst ein Basisteil 11, das z.B. fahrzeugfest angeordnet sein kann, sowie ein Ausstattungsteil 12. Das Basisteil 11 ist U-förmig ausgebildet und umfasst einen zentralen Bereich 17 sowie zwei rechtwinklig zu dem zentralen Bereich 17 geformte Flankenbereiche 18a und 18b.

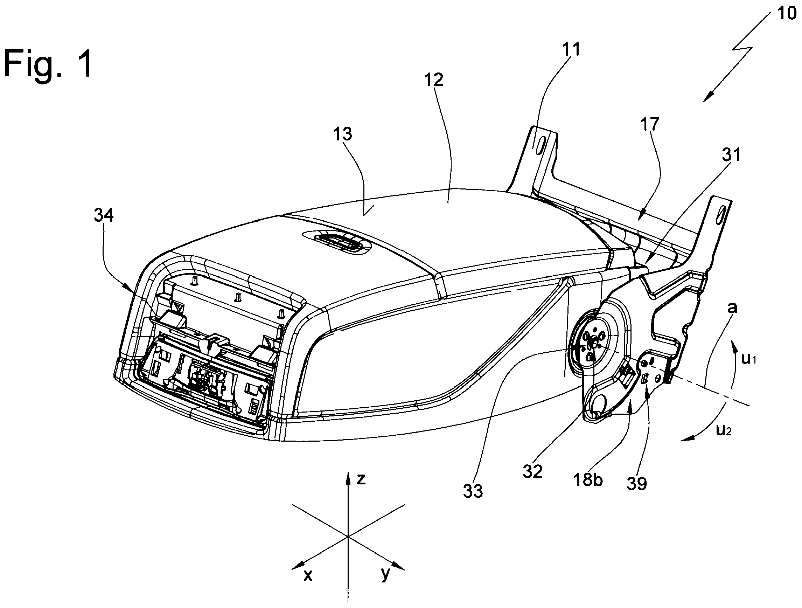

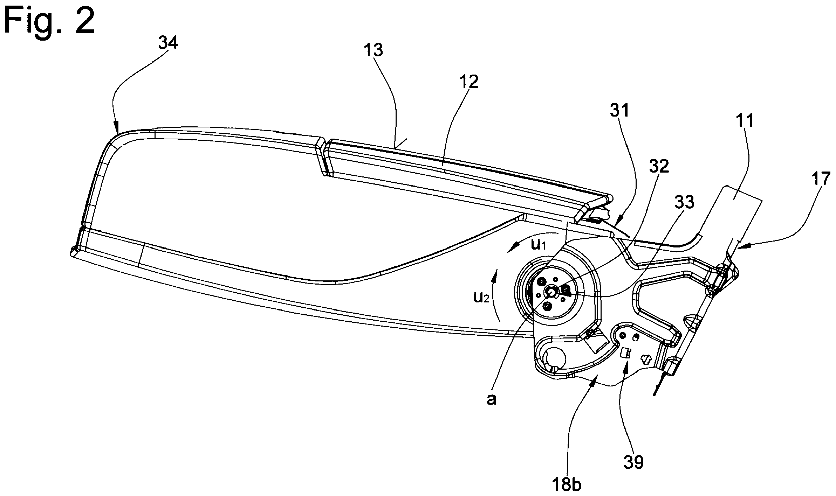

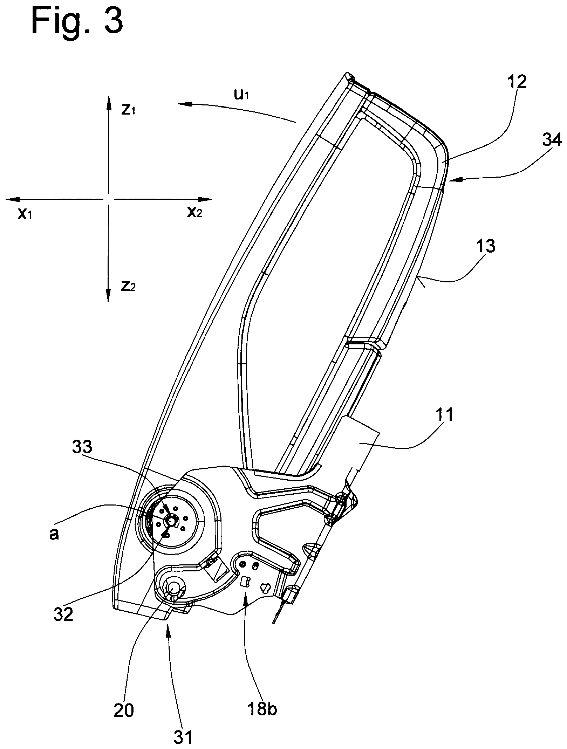

Das Ausstattungsteil 12 ist im vorliegenden Ausführungsbeispiel als Armauflage ausgebildet. Das Ausstattungsteil 12 ist um eine Schwenkachse a zwischen einer in den Fig. 1 und 2 dargestellten etwa horizontal angeordneten Gebrauchsposition und einer in Fig. 3 dargestellten etwa vertikal angeordneten Nichtgebrauchsposition schwenkbar an dem Basisteil 11 gelagert. Die Nichtgebrauchsposition ist z.B. eine erste Position und die Gebrauchsposition eine zweite Position im Sinne der Erfindung.

Ein Endbereich 31 des Ausstattungsteils 12 ist zwischen den Flankenbereichen 18a und 18b aufgenommen. Ein freier Endbereich 34 des Ausstattungsteils 12 liegt dem Endbereich 31 gegenüber. Lagerzapfen 32, die an dem Endbereich 31 beidseitig von dem Ausstattungsteil 12 vorstehen, greifen in Achsbohrungen 33, die in den Flankenbereichen 18a und 18b gebildet sind. Die Lagerzapfen 32 definieren zusammen mit den Achsbohrungen 33 die Schwenkachse a.

In der Gebrauchsposition kann sich ein Insasse auf einer Armauflagefläche 13 abstützen und auf ggf. auf an der Armauflage vorhandene Funktionsteile zugreifen.

In Fig. 3 ist das Ausstattungsteil 12 in der ersten Position gezeigt, die eine Nichtgebrauchsposition der Armauflage ist. Es ist erkennbar, dass seitlich von dem Ausstattungsteil 12 ein Anschlag 20 vorsteht. Ein entsprechender Anschlag 20 ist - obwohl er in den Fig. nicht erkennbar ist - auch an einer gegenüberliegenden Seite des Ausstattungsteils 12 befestigt. Der Anschlag 20 ist Teil einer Verriegelungsvorrichtung, welche im Falle einer starken Fahrzeugverzögerung, z.B. im Falle eines Fahrzeug-Crashs, das Ausstattungsteil 12 arretiert, so dass eine schnelle Bewegung des Ausstattungsteils 12 einen Insassen nicht verletzen kann.

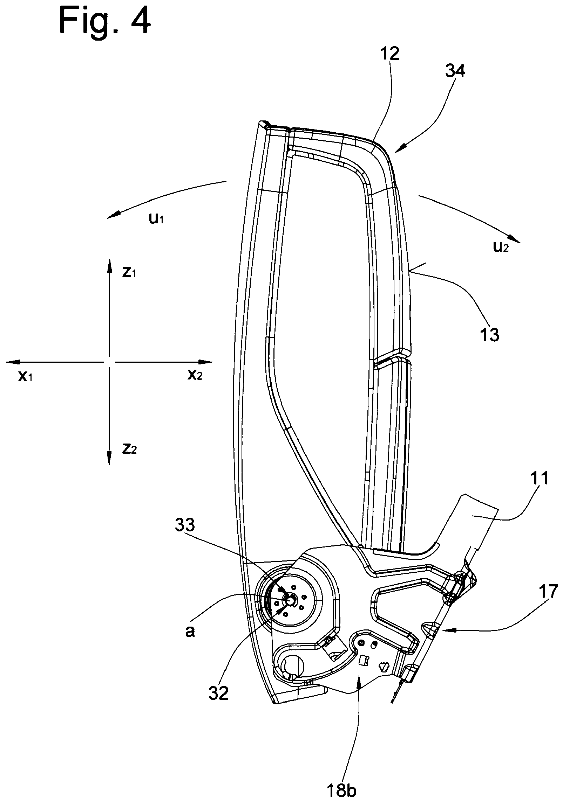

In Fig. 4 ist das Ausstattungsteil 12 in einer verriegelten Position gezeigt, in welcher eine Bewegung in Richtung u1 nicht möglich ist, was nachstehend erläutert wird.

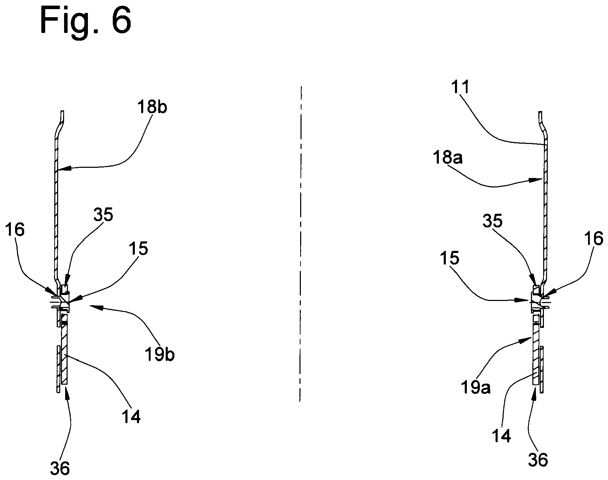

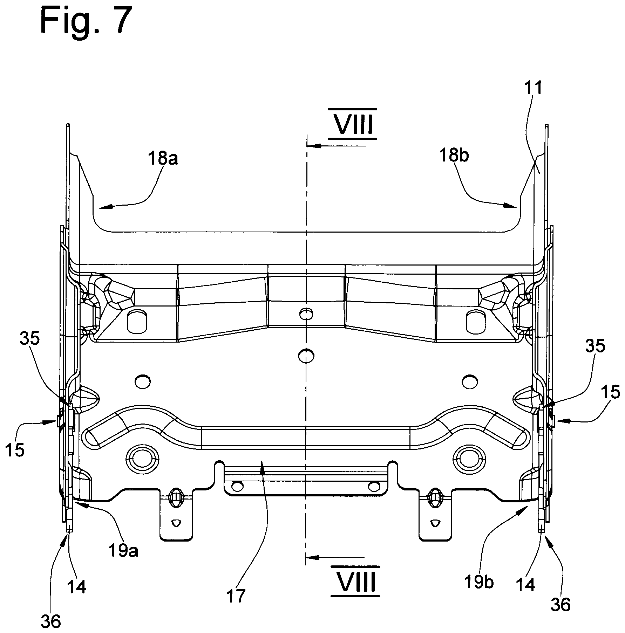

Im vorliegenden Ausführungsbeispiel sind zwei Verriegelungsvorrichtungen 19a und 19b Bestandteil der Ausstattungsvorrichtung 10 (siehe die Fig. 6 und 7). Jedem der Flankenbereiche 18a und 18b ist ein Riegel 14 zugeordnet und an gegenüberliegenden Seitenbereichen des Ausstattungsteils 12 sind seitlich vorragende Anschläge 20 angeordnet. Der Riegel 14 und der Anschlag 20 sind Teil der jeweiligen Verriegelungsvorrichtung 19a bzw. 19b. Da sich die Verriegelungsvorrichtungen 19a und 19b bezüglich ihres Aufbaus nicht unterscheiden, wird nachfolgend lediglich die Verriegelungsvorrichtung 19a beschrieben.

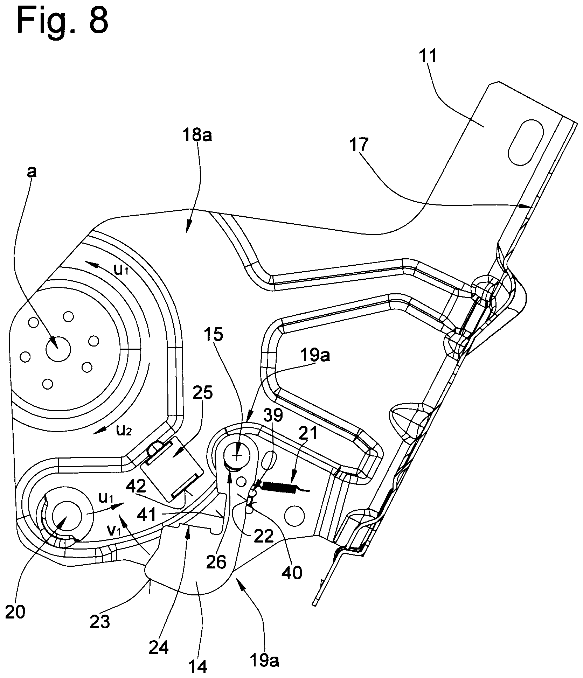

Die Verriegelungsvorrichtung 19a umfasst gemäß Fig. 8 den Riegel 14 sowie den Anschlag 20. Der Riegel 14 ist mittels einer Lagerachse 15 in die Richtungen v1 und v2 schwenkbar an dem Basisteil 11 gelagert. Die Lagerachse 15 ist von einem Niet gebildet, der eine Bohrung 16 in dem Basisteil 11 und ein Langloch 26 in dem Riegel 14 durchgreift. Eine Feder 21 ist mit einem Federende an dem Riegel 14 und mit einem anderen Federende an dem Basisteil 11 befestigt. An dem Riegel 14 ist zur Befestigung des Endbereichs der Feder 21 eine Aussparung 38 vorhanden. Die Feder 21 belastet den Riegel 14 gegen eine Widerlagerfläche 22 eines aus dem Basisteil 11 ausgeformten Widerlagers 39. Indem die Eigenschaften der Feder 21 entsprechend ausgewählt werden, ist der Grenzwert der Fahrzeugverzögerung einstellbar, bei dem sich der Riegel 14 aus der Löseposition in Richtung v1 bewegt.

Wenn eine erste Anschlagfläche 40 des Riegels 14 in Kontakt mit der Widerlagerfläche 22 steht, befindet sich der Riegel 14 in einer Löseposition. In der Löseposition ist der Riegel 14 nicht in der Bewegungsbahn des Anschlags 20 angeordnet, wenn das Ausstattungsteil 12 zwischen der ersten Position und der zweiten Position bewegt wird. Aus der Löseposition ist der Riegel 14 aufgrund einer Fahrzeugbeschleunigung in Richtung v1 in einer erste Riegelposition bewegbar. In der ersten Riegelposition steht eine zweite Anschlagfläche 41 des Riegels 14 in Kontakt mit einer Gegenfläche 42 des Basisteils 11. Im vorliegenden Ausführungsbeispiel ist die Gegenfläche 42 von einer Wand des Basisteils 11 gebildet. In der zweiten Riegelposition ist die Riegelfläche 23 des Riegels 14 in der Bewegungsbahn des Anschlags 20 angeordnet.

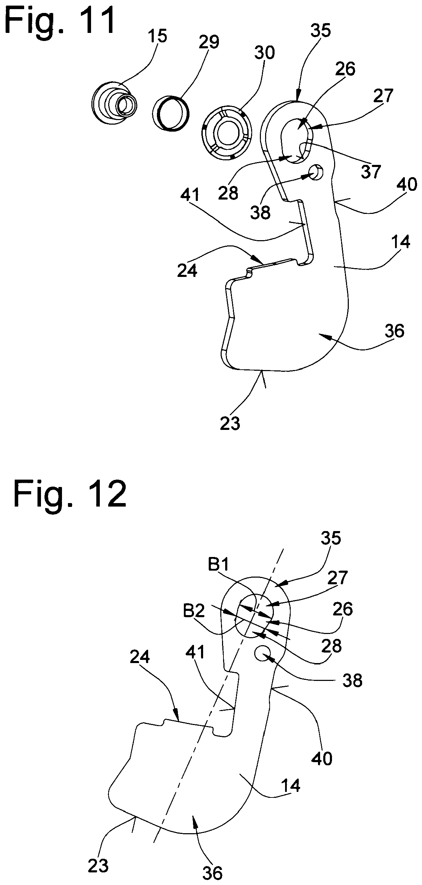

Der Riegel 14 ist in den Fig. 11 und 12 genauer dargestellt. In Fig. 11 sind die als Niet ausgebildete Lagerachse 14, eine Buchse 29, die im Ausführungsbeispiel als Kunststoffbuchse ausgebildet ist sowie eine Druckfeder 30 gezeigt. Die Druckfeder 30 ist zur Vermeidung von Klappergeräuschen vorgesehen. Die Aufgabe der Buchse 29 ist weiter unten erläutert.

Der Riegel 14 weist einen primären Endbereich 35 auf, welcher das Langloch 26 umfasst sowie einen sekundären Endbereich 36 an welchem eine Riegelfläche 23 ausgebildet ist, die mit dem Anschlag 20 zusammenwirkt. Der Riegelfläche 23 gegenüberliegend sind erste Formschlussmittel 24 in Form eines Vorsprungs an dem Riegel 14 ausgebildet. An dem sekundären Endbereich 36 ist der Riegel 14 mit einer Masseanhäufung versehen, die bei einer Fahrzeugverzögerung eine große Trägheitskraft erzeugt. Eine Innenfläche 37 des Langlochs 26 verjüngt sich konisch und umfasst einen ersten Bereich 27 und einen zweiten Bereich 28 auf. In dem ersten Bereich 27 weist das Langloch eine Breite B1 und in dem zweiten Bereich 28 eine Breite B2 auf.

Wenn die Lagerachse 15 mit der Buchse 29 in dem ersten Bereich 27 des Langlochs 26 angeordnet ist, liegt eine Spielpassung vor, so dass die Lagerachse 15 in dem ersten Bereich 27 ausreichenden Bewegungsspielraum hat. Sie kann z.B. in die Richtungen v1 und v2 zwischen der Ruheposition und der ersten Riegelposition rotieren. Bewegt sich die Lagerachse 15 mit der Buchse 29 in Richtung p1 in den engeren zweiten Bereich 28, wird die Buchse 29 verformt, wodurch eine Presspassung gebildet wird, welche die Lagerachse 15 in dem zweiten Bereich 28 derart verpresst, dass sie sich weder radial in Richtung p2 in den ersten Bereich 27 zurückbewegen, noch in Richtung v2 schwenken kann.

Im vorliegenden Ausführungsbeispiel sind die ersten Formschlussmittel 24 von einem Vorsprung an dem Riegel 14 gebildet. An dem Basisteil ausgebildete zweite Formschlussmittel 25 sind als zwei parallele Wände ausgestaltet, welche den Vorsprung derart verriegeln, dass sich der Riegel 14 nicht in Richtung v2 in Richtung Löseposition drehen kann. Im vorliegenden Ausführungsbeispiel ist auch die Gegenfläche 42 von einer Wand der zweiten Formschlussmittel 25 gebildet. Die Gegenfläche 42 und die zweiten Formschlussmittel 25 können aber auch unabhängig voneinander sein.

Bei den ersten Formschlussmitteln 24 und den zweiten Formschlussmitteln 25, die auch andere Ausgestaltungen haben können, kommt es im Wesentlichen darauf an, dass sie eine Bewegung des Riegels 14 aus der Riegelposition heraus verhindern, so dass das Ausstattungsteil sicher verriegelt ist. Im vorliegenden Ausführungsbeispiel verhindern sie ein Schwenken des Riegels 14 in Richtung v2.

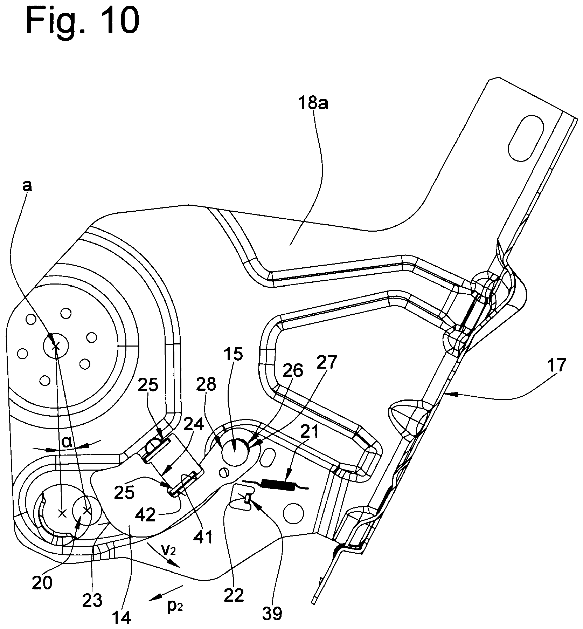

In Fig. 8 ist eine Schnittansicht des Basisteils 11 gezeigt. Das Ausstattungsteil 12 ist in den Fig. 8 bis 10 nicht dargestellt. Zur Erläuterung der Funktion der Ausstattungsvorrichtung 10 ist aber in den Fig. 8, 9 und 10 von dem Ausstattungsteil 12 der Anschlag 20 der Verriegelungsvorrichtung 19a schematisch dargestellt. Die in Fig. 8 dargestellte Position des Anschlags 20 entspricht der Position des Ausstattungsteils gemäß Fig. 3. Die in Fig. 10 dargestellte Position des Anschlags 20 entspricht einer Position des Ausstattungsteils gemäß Fig. 4.

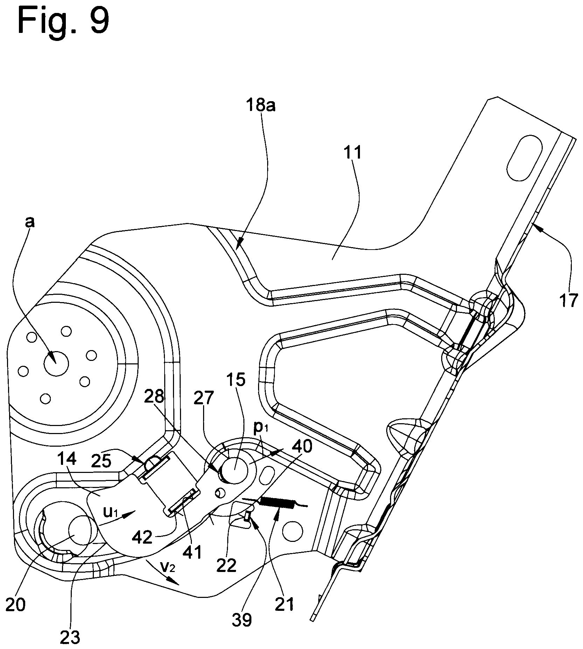

Bei einer Fahrzeugverzögerung, deren Grenzwert einstellbar ist, indem die Eigenschaften der Feder 21 entsprechend ausgewählt werden, wird der Riegel 14 entgegen der Kraft der Feder 21 um die Lagerachse 15 in Richtung v1 in die in Fig. 9 dargestellte erste Riegelposition geschwenkt. In der ersten Riegelposition befindet sich die Riegelfläche 23 in der Bewegungsbahn des Anschlags 20. Zeitverzögert zu der Bewegung des Riegels 14 wird das Ausstattungsteil 12 um die Schwenkachse a in Richtung u1 geschwenkt, wobei sich der Anschlag 20 mit dem Ausstattungsteil in Richtung u1 in den Kontakt mit der Gegenfläche 23 bewegt (siehe Fig. 9).

Bei weiterer Bewegung des Ausstattungsteils 12 in Richtung u1, bewegt der Anschlag 20 den Riegel 14 in axiale Richtung p1, so dass sich der Riegel 14 mit dem Langloch 26 relativ zu der Lagerachse 15 von dem ersten Bereich 27 in den zweiten Bereich 28 bewegt, wie in Fig. 10 dargestellt. Gemäß Fig. 10 ist der Riegel 14 in der zweiten Riegelposition gezeigt. In der zweiten Riegelposition ist die Riegelfläche 23 in der Bewegungsbahn des Anschlags 20 angeordnet, so dass das Ausstattungsteil 12 sich nicht weiter in Richtung u1 bewegen kann.

Bei der Bewegung des Riegels 14 in Richtung p1 bewegen sich die ersten Formschlussmittel 24 in Eingriff mit zweiten Formschlussmitteln 25. In der zweiten Riegelposition ist der Vorsprung zwischen den Wänden der zweiten Formschlussmittel 25 angeordnet und bildet eine sichere Verriegelung des Ausstattungsteils 12. D.h., es ist keine Bewegung des Ausstattungsteils 12 in Richtung u1 möglich, wenn sich die Verriegelungsvorrichtungen 19a und 19b in der zweiten Riegelposition befinden.

Der Eingriff der ersten Formschlussmittel 24 und der zweiten Formschlussmittel 25 stellt eine zusätzliche Sicherung dar. Gemäß einer alternativen Ausführungsform, könnte diese zusätzliche Sicherung weggelassen werden, weil in der zweiten Riegelposition die Presspassung zwischen dem zweiten Bereich 28 des Langlochs 26 und der Lagerachse 15 eine Bewegung des Riegels 14 aus der Riegelposition verhindert.

In der zweiten Riegelposition ist das Ausstattungsteil 12 in einer Position gemäß Fig. 4 angeordnet. In dieser Position hat das Ausstattungsteil 12 bezüglich der ersten Position gemäß Fig. 3 lediglich eine geringfügige Bewegung durchgeführt. Im vorliegenden Ausführungsbeispiel hat das Ausstattungsteil 12 zwischen der ersten Position und der in Fig. 4 gezeigten, verriegelten Position den Winkel α zurückgelegt, der z.B. 15° betragen kann.

## Patentansprüche

1. Ausstattungsvorrichtung (10) für ein Fahrzeug, mit einem Basisteil (11), das fahrzeugfest angeordnet sein kann, mit einem zwischen einer ersten Position und einer zweiten Position bewegbaren Ausstattungsteil (12), welches an dem Basisteil (11) translatorisch und / oder rotatorisch bewegbar gelagert ist, mit einer Verriegelungsvorrichtung (19a, 19b) mit einem Riegel (14), welcher mittels eines Schwenkgelenks (G) um eine Lagerachse (15) derart schwenkbar gelagert ist, dass er im Falle einer Fahrzeugbeschleunigung aus einer Löseposition in eine erste Riegelposition schwenkt, wobei in der Löseposition das Ausstattungsteil (12) frei bewegbar ist und in der Riegelposition das Bewegen des Ausstattungsteils (12) durch den Kontakt zwischen wenigstens einem Anschlag (20) und dem Riegel (14) in wenigstens eine Richtung verhindert wird, **dadurch gekennzeichnet, dass** das Schwenkgelenk (G) von einer in einem Langloch (26) gelagerten Lagerachse (15) gebildet ist so dass die Lagerachse (15) zur Verhinderung einer Rückbewegung in die Löseposition relativ zu dem Langloch (26) von der ersten Riegelposition, in welcher die Lagerachse (15) in einem ersten Bereich (27) des Langlochs (26) angeordnet ist, in eine zweite Riegelposition bewegbar ist, in welcher die Lagerachse (15) in einem zweiten Bereich (28) des Langlochs (26) angeordnet ist.

2. Ausstattungsvorrichtung nach Anspruch 1, **dadurch gekennzeichnet, dass** das Ausstattungsteil (12) mittels eines Schwenkgelenks um eine Schwenkachse (a) zwischen einer ersten Position und einer zweiten Position schwenkbar an dem Basisteil (11) gelagert ist.

3. Ausstattungsvorrichtung nach einem der vorangehenden Ansprüche, **dadurch gekennzeichnet, dass** das Langloch (26) dem Riegel (14) und die Lagerachse (15) dem Basisteil (11) zugeordnet ist oder dass die Lagerachse (15) dem Riegel (14) und das Langloch (26) dem Basisteil (11) zugeordnet ist.

4. Ausstattungsvorrichtung nach einem der vorangehenden Ansprüche, **dadurch gekennzeichnet, dass** der Riegel (14) von einer Feder (21) in die Löseposition belastet ist.

5. Ausstattungsvorrichtung nach einem der vorangehenden Ansprüche, **dadurch gekennzeichnet, dass** der Riegel (14) in der Löseposition und / oder in wenigstens einer Riegelposition in Kontakt mit mindestens einem Widerlager (39) steht.

6. Ausstattungsvorrichtung nach einem der vorangehenden Ansprüche, **dadurch gekennzeichnet, dass** der Riegel (14) bei der Bewegung zwischen der ersten Riegelposition und der zweiten Riegelposition eine Bewegung in radiale Richtung (p1) in Bezug auf die Lagerachse (15) durchführt.

7. Ausstattungsvorrichtung nach einem der vorangehenden Ansprüche, **dadurch gekennzeichnet, dass** der Riegel (14) von dem Anschlag (20) bei einer Bewegung des Ausstattungsteils (12) von der ersten Riegelposition in die zweite Riegelposition bewegbar ist.

8. Ausstattungsvorrichtung nach einem der vorangehenden Ansprüche, **dadurch gekennzeichnet, dass** die Lagerachse (15) in dem ersten Bereich (27) mit einer Spielpassung und in dem zweiten Bereich (28) mit einer Presspassung aufgenommen ist.

9. Ausstattungsvorrichtung nach einem der vorangehenden Ansprüche, **dadurch gekennzeichnet, dass** der Riegel (14) ein erstes Formschlussmittel (24) und das Basisteil (11) ein zweites Formschlussmittel (25) aufweist und dass in der Löseposition und der ersten Riegelposition das erste Formschlussmittel (24) und das zweite Formschlussmittel (25) außer Eingriff sind und in der zweiten Riegelposition in Eingriff sind.

10. Ausstattungsvorrichtung (10) nach einem der Ansprüche 1 bis 10 wobei die Ausstattungsvorrichtung (10) von einer Armlehne und das Ausstattungsteil (12) von einer schwenkbaren Armauflage der Armlehne gebildet ist.

## Claims

1. Accessory device (10) for a vehicle, comprising a base part (11) which can be arranged fixed with respect to the vehicle, comprising an accessory part (12) which is movable between a first position and a second position and which is mounted movably in translation and/or in rotation on the base part (11), comprising a locking device (19a, 19b) comprising a latch (14) which is mounted pivotably about a bearing axle (15) by means of a pivot joint (G) in such a way that said latch pivots from a release position into a first latching position if the vehicle accelerates, the accessory part (12) being freely movable in the release position and the movement of the accessory part (12) being prevented in at least one direction in the latching position by the contact between at least one stop (20) and the latch (14), **characterised in that** the pivot joint (G) is formed by a bearing axle (15) mounted in an slot (26), in such a way that, for preventing a movement back into the release position, the bearing axle (15) is movable relative to the slot (26) from the first latching position, in which the bearing axle (15) is arranged in a first region (27) of the slot (26), into a second latching position, in which the bearing axle (15) is arranged in a second region (28) of the slot (26).

2. Accessory device according to claim 1, **characterised in that** the accessory part (12) is mounted on the base part (11) pivotably about a pivot axle (a) between a first and a second position, by means of a pivot joint.

3. Accessory device according to either of the preceding claims, **characterised in that** the slot (26) is assigned to the latch (14) and the bearing axle (15) is assigned to the base part (11), or **in that** the bearing axle (15) is assigned to the latch (14) and the slot (26) is assigned to the base part (11).

4. Accessory device according to any of the preceding claims, **characterised in that** the latch (14) is loaded into the release position by a spring (21).

5. Accessory device according to any of the preceding claims, **characterised in that** in the release position and/or in at least one latching position the latch (14) is in contact with at least one counter bearing (39).

6. Accessory device according to any of the preceding claims, **characterised in that** the latch (14) performs a movement in the radial direction (p1) with respect to the bearing axle (15) during the movement between the first latching position and the second latching position.

7. Accessory device according to any of the preceding claims, **characterised in that** the latch (14) is movable from the first latching position into the second latching position by the stop (20) during a movement of the accessory part (12).

8. Accessory device according to any of the preceding claims, **characterised in that** the bearing axle (15) is received in a loose fit in the first region (27) and in a tight fit in the second region (28).

9. Accessory device according to any of the preceding claims, **characterised in that** the latch (14) has a first positive fit means (24) and the base part (11) has a second positive fit means (25), and **in that** the first positive fit means (24) and the second positive fit means (25) are disengaged in the release position and the first latching position and engaged in the second latching position.

10. Accessory device (10) according to any of claims 1 to 10, wherein the accessory device (10) is formed by an armrest and the accessory part (12) is formed by a pivotable arm support of the armrest.

## Revendications

1. Dispositif d'aménagement (10) pour un véhicule, avec une partie de base (11), qui peut être disposée de manière fixe au véhicule, avec une partie d'aménagement (12) qui peut se déplacer entre une première position et une seconde position et qui est montée sur la partie de base (11) de manière mobile en translation et/ou en rotation, avec un dispositif de verrouillage (19a, 19b) muni d'un verrou (14) qui est monté pivotant à l'aide d'une articulation pivotante (G) de manière à pivoter autour d'un axe de palier (15), dans le cas d'une accélération du véhicule, depuis une position de déverrouillage dans une première position de verrou, dans lequel dans la position de déverrouillage la partie d'aménagement (12) peut se déplacer librement et dans la position de verrou le déplacement de la partie d'aménagement (12) est empêché au moins dans une direction par le contact entre au moins une butée (20) et le verrou (14), **caractérisé en ce que** l'articulation pivotante (G) est formée par un axe de palier (15) monté dans un trou oblong (26) de telle sorte que l'axe de palier (15) peut, pour empêcher un mouvement de retour dans la position de déverrouillage, se déplacer par rapport au trou oblong (26) depuis la première position de verrou, dans laquelle l'axe de palier (15) est disposé dans une première zone (27) du trou oblong (26), jusque dans une seconde position de verrou, dans laquelle l'axe de palier (15) est disposé dans une seconde zone (28) du trou oblong (26).

2. Dispositif d'aménagement selon la revendication 1, **caractérisé en ce que** la partie d'aménagement (12) est montée pivotante sur la partie de base (11) à l'aide d'une articulation pivotante autour d'un axe de pivotement (a) entre une première position et une seconde position.

3. Dispositif d'aménagement selon une des revendications précédentes, **caractérisé en ce que** le trou oblong (26) est associé au verrou (14) et l'axe de palier (15) à la partie de base (11) ou **en ce que** l'axe de palier (15) est associé au verrou (14) et le trou oblong (26) à la partie de base (11).

4. Dispositif d'aménagement selon une des revendications précédentes, **caractérisé en ce que** le verrou (14) est sollicité dans la position de déverrouillage par un ressort (21).

5. Dispositif d'aménagement selon une des revendications précédentes, **caractérisé en ce que** le verrou (14), dans la position de déverrouillage et/ou dans au moins une position de verrou, est en contact avec au moins un palier (39).

6. Dispositif d'aménagement selon une des revendications précédentes, **caractérisé en ce que** le verrou (14), lors du déplacement entre la première position de verrou et la seconde position de verrou, réalise un déplacement dans la direction radiale (p1) par rapport à l'axe de palier (15).

7. Dispositif d'aménagement selon une des revendications précédentes, **caractérisé en ce que** le verrou (14) peut se déplacer de la butée (20) depuis la première position de verrou jusque dans la seconde position de verrou lors d'un déplacement de la partie d'aménagement (12).

8. Dispositif d'aménagement selon une des revendications précédentes, **caractérisé en ce que** l'axe de palier (15) est logé dans la première zone (27) selon un ajustement avec jeu et dans la seconde zone (28) selon un ajustement avec serrage.

9. Dispositif d'aménagement selon une des revendications précédentes, **caractérisé en ce que** le verrou (14) présente un premier moyen de complémentarité de forme (24) et la partie de base (11) un second moyen de complémentarité de forme (25) et **en ce que** le premier moyen de complémentarité de forme (24) et le second moyen de complémentarité de forme (25) sont hors prise dans la position de déverrouillage et la première position de verrou, et sont en prise dans la position de verrou.

10. Dispositif d'aménagement (10) selon une des revendications 1 à 10, dans lequel le dispositif d'aménagement (10) est formé par un accoudoir et la partie d'aménagement (12) par un repose-bras pivotant de l'accoudoir.
